(19) 

Europäisches
Patentamt

European
Patent Office

Office européen
des brevets

(11) **EP 1 956 041 B1**

(12) **EUROPEAN PATENT SPECIFICATION**

(45) Date of publication and mention
of the grant of the patent:
**11.01.2012 Bulletin 2012/02**

(21) Application number: **06833138.8**

(22) Date of filing: **22.11.2006**

(51) Int Cl.:
*C08J 9/26* (2006.01)   *B01D 67/00* (2006.01)
*B01D 69/02* (2006.01)   *B01D 71/26* (2006.01)
*H01M 2/16* (2006.01)   *H01M 10/42* (2006.01)

(86) International application number:
**PCT/JP2006/323316**

(87) International publication number:
**WO 2007/060990 (31.05.2007 Gazette 2007/22)**

(54) **MICROPOROUS POLYOLEFIN MEMBRANE, PROCESS FOR PRODUCING THE SAME, SEPARATOR FOR CELL, AND CELL**

MIKROPORÖSE POLYOLEFINMEMBRAN, HERSTELLUNGSVERFAHREN DAFÜR, SEPARATOR FÜR ZELLE UND ZELLE

MEMBRANE MICROPOREUSE POLYOLEFINIQUE, PROCEDE DE PRODUCTION, SEPARATEUR DE CELLULE, ET CELLULE

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.11.2005 JP 2005339450**

(43) Date of publication of application:
**13.08.2008 Bulletin 2008/33**

(73) Proprietor: **Toray Tonen Specialty Separator Godo Kaisha
Tochigi Prefecture, 329-2763 (JP)**

(72) Inventors:
• **KIMISHIMA, Kotaro
Yokohama-shi, Kanagawa 235-0022 (JP)**
• **KAIMAI, Norimitsu
Yokohama-shi, Kanagawa 230-0074 (JP)**

(74) Representative: **Strehl Schübel-Hopf & Partner
Maximilianstrasse 54
80538 München (DE)**

(56) References cited:
**WO-A1-2004/024809     JP-A- 2001 200 082
JP-A- 2002 367 589     JP-A- 2003 253 026
JP-A- 2005 209 452     JP-A- 2005 343 957
JP-A- 2005 343 958**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

This invention relates to a microporous polyolefin membrane, its production method, a battery separator and a battery, particularly to a microporous polyolefin membrane having an excellent balance of shutdown properties, melting shrinkage resistance and meltdown properties, its production method, a battery separator and a battery.

BACKGROUND OF THE INVENTION

Microporous polyethylene membranes are mainly used for battery separators. Particularly lithium ion battery separators are required to have not only excellent mechanical properties and permeability, but also a property of closing pores by heat generation in batteries to stop battery reactions (shutdown properties), a property of preventing membranes from breaking at temperatures exceeding shutdown temperatures (meltdown properties), etc.

As a method for improving the properties of a microporous polyethylene membrane, the optimization of starting material compositions, production conditions, etc. has been proposed. For instance, Japanese Patent 2132327 proposes a microporous polyolefin membrane having excellent strength and permeability, which is made of a polyolefin composition comprising 1% or more by weight of ultra-high-molecular-weight polyolefin having a mass-average molecular weight (Mw) of $7 \times 10^5$ or more, and having a molecular weight distribution [mass-average molecular weight/number-average molecular weight (Mw/Mn)] of 10 to 300, the microporous polyolefin membrane having porosity of 35 to 95%, an average pore diameter of 0.001 to 0.2 $\mu$m, and a rupture strength of 0.2 kg or more per 15-mm width.

JP 2004-196870 A proposes a microporous polyolefin membrane comprising polyethylene, and polypropylene having a mass-average molecular weight of $5 \times 10^5$ or more and a heat of fusion of 90 J/g or more (measured by a differential scanning calorimeter). JP 2004-196871 A proposes a microporous polyolefin membrane comprising polyethylene, and polypropylene having a mass-average molecular weight of $5 \times 10^5$ or more and a melting point of 163°C or higher (measured by a differential scanning calorimeter at a temperature-elevating speed of 3 to 20°C/minute). The microporous polyolefin membranes of JP 2004-196870 A and JP 2004-196871 A have shutdown temperatures of 120 to 140°C and meltdown temperatures of 165°C or higher, as well as excellent mechanical properties and permeability.

WO 97/23554 discloses a microporous membrane having high short-circuiting resistance (shutdown properties), which is made of high-density polyethylene or a linear ethylene copolymer having an end vinyl group concentration of 2 or more per 10,000 carbon atoms when measured by infrared spectroscopy, and a fuse temperature (shutdown temperature) of 131 to 136°C.

However, when a runaway reaction occurs in batteries, the battery temperature elevates for a while even after the shutdown of separators, causing the shrinkage of the separators. As a result, short-circuiting occurs at their end portions, accelerating the runaway reaction. However, the microporous membranes described in the above references do not have a sufficient property of preventing short-circuiting while keeping their shapes even at temperatures exceeding their shutdown temperatures (melt shrinkage resistance).

OBJECT OF THE INVENTION

Accordingly, an object of this invention is to provide a microporous polyolefin membrane having an excellent balance of shutdown properties, melting shrinkage resistance and meltdown properties, its production method, a battery separator and a battery.

DISCLOSURE OF THE INVENTION

As a result of intense research in view of the above object, the inventors have found that (1) a microporous polyolefin membrane having excellent shutdown properties is obtained from a polyolefin resin comprising a polyethylene resin having a temperature of 135°C or lower, at which a crystal-melting calorie measured by differential scanning calorimetry at a predetermined temperature-elevating speed reaches 60% of the total crystal-melting calorie; and that (2) a microporous polyolefin membrane having an excellent balance of shutdown properties, melting shrinkage resistance and meltdown properties is obtained by melt-blending a polyolefin resin comprising the above polyethylene resin with a membrane-forming solvent, to prepare a polyolefin resin solution having an angular frequency of 0.1 rad/sec or more, at which a storage modulus and a loss modulus obtained by melt viscoelasticity measurement at a predetermined temperature are equal to each other, and a complex viscosity of $1 \times 10^4$ Pa·s or more at an angular frequency of 0.01 rad/sec in the melt viscoelasticity measurement, extruding the polyolefin resin solution through a die, cooling it to form a gel-like sheet, and removing the membrane-forming solvent from the gel-like sheet. This invention has been completed based on such findings.

Thus, the microporous polyolefin membrane of this invention comprises a polyethylene resin, and has (a) a shutdown temperature of 135°C or lower, at which the air permeability measured while heating at a temperature-elevating speed of 5°C/minute reaches $1 \times 10^5$ sec/100 cm$^3$, (b) a maximum melting shrinkage ratio of 40% or less in a transverse direction in a temperature range of 135 to 145°C, which is measured by thermomechanical analysis under a load of 2 gf and at a temperature-elevating speed of 5°C/minute, and (c) a meltdown temperature of 150°C or higher, at which the air permeability measured while further heating after reaching the shutdown temperature becomes $1 \times 10^5$ sec/100 cm$^3$ again.

The polyethylene resin has a temperature of 135°C or lower, at which a crystal-melting calorie measured by differential scanning calorimetry at a constant temperature-elevating speed in a range of 3 to 20°C/minute reaches 60% of the total crystal-melting calorie.

The method for producing the microporous polyolefin membrane of this invention comprises the steps of (1) melt-blending a polyolefin resin comprising a polyethylene resin having a temperature of 135°C or lower, at which a crystal-melting calorie measured by differential scanning calorimetry at a constant temperature-elevating speed in a range of 3 to 20°C/minute reaches 60% of the total crystal-melting calorie, with a membrane-forming solvent, to prepare a polyolefin resin solution having an angular frequency of 0.1 rad/sec or more, at which a storage modulus and a loss modulus obtained by melt viscoelasticity measurement at a constant temperature in a range of 160 to 220°C are equal to each other, and a complex viscosity of $1 \times 10^4$ Pa·s or more at an angular frequency of 0.01 rad/sec in the melt viscoelasticity measurement, (2) extruding the polyolefin resin solution through a die, (3) cooling it to form a gel-like sheet, and (4) removing the membrane-forming solvent from the gel-like sheet.

The melt-blending of the polyolefin resin with the membrane-forming solvent is conducted in a double-screw extruder, a ratio Q/Ns of the total charging speed Q (kg/h) of the polyolefin resin and membrane-forming solvent to the screw rotation speed Ns (rpm) of the double-screw extruder being 0.1 to 0.55 kg/h/rpm. The gel-like sheet is stretched at a speed of 1 to 80%/second per 100% of the stretching-direction length before stretching.

The battery separator of this invention is formed by the above microporous polyolefin membrane.

The battery of this invention comprises a separator formed by the above microporous polyolefin membrane.

BRIEF DESCRIPTION OF THE DRAWING

Fig. 1 is a graph showing a typical example of melting endotherm curves.

Fig. 2 is a graph showing a temperature T (60%), at which a crystal-melting calorie reaches 60% of the total crystal-melting calorie in the same melting endotherm curve as in Fig. 1.

Fig. 3 is a graph exemplifying a log $\omega$-log G' curve and a log $\omega$-log G" curve for determining $\omega_0$.

Fig. 4 is a graph showing a typical example of temperature T-(air permeability p)$^{-1}$ curves for determining a shutdown start temperature.

Fig. 5 is a graph showing a typical example of curves of air permeability p to temperature T for determining a shutdown temperature, an air permeability change ratio and a meltdown temperature.

Fig. 6 is a graph showing a typical example of temperature -dimensional change ratio curves for determining the maximum melting shrinkage ratio.

DESCRIPTION OF THE PREFERRED EMBODIMENTS

[1] Polyolefin resin

The polyolefin resin forming the microporous polyolefin membrane of this invention comprises a polyethylene resin described below.

(1) Crystal-melting calorie of polyethylene resin

The polyethylene resin has a temperature [hereinafter referred to as "T (60%)"] of 135°C or lower, at which a crystal-melting calorie $\Delta H_m$ measured by differential scanning calorimetry (DSC) at a constant temperature-elevating speed in a range of 3 to 20°C/minute reaches 60% of the total crystal-melting calorie. T (60%) is a parameter affected by the primary structure of the polyethylene (homopolymer or ethylene-$\alpha$-olefin copolymer) such as a molecular weight, a molecular weight distribution, a branching ratio, the molecular weight of branched chains, the distribution of branching points, the percentage of copolymers, etc., and the high-order structure of the polyethylene such as the size and distribution of crystals, crystal lattice regularity, etc. T (60%) is a measure of the shutdown temperature of the microporous polyolefin membrane. When the T (60%) is higher than 135°C, a lithium battery separator formed by the microporous polyolefin membrane has a high shutdown temperature and low shutdown response when overheated.

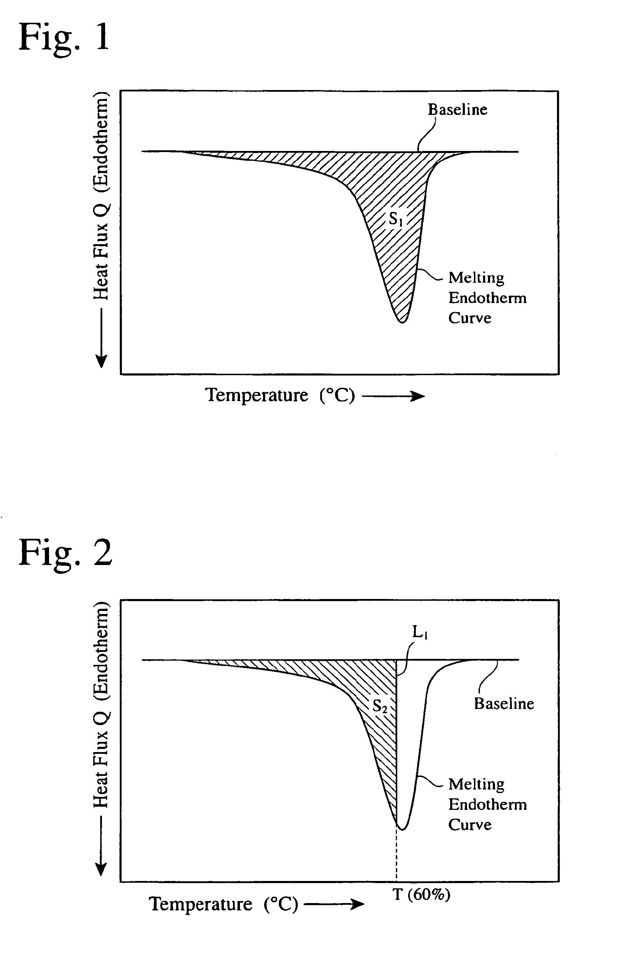

The crystal-melting calorie $\Delta H_m$ of the polyethylene resin was measured by the following procedure according to JIS K7122. Namely, a sample of the polyethylene resin (0.5-mm- thick molding melt-pressed at 210°C) was placed in a sample holder of a differential scanning calorimeter (Pyris Diamond DSC available from Perkin Elmer, Inc.), heat-treated at 230°C for 1 minute in a nitrogen atmosphere, cooled to 30°C at 10°C/minute, kept at 30°C for 1 minute, and heated to 230°C at a speed of 3 to 20°C/minute. The temperature-elevating speed is preferably 5 to 15°C/minute, more preferably 10°C/minute. As shown in Fig. 1, the calorie was calculated from an area $S_1$ of a region (shown by hatching) enclosed by a DSC curve (melting endotherm curve) obtained during temperature elevation and a baseline. The crystal-melting calorie $\Delta H_m$ (unit: J/g) was obtained by dividing the calorie (unit: J) by the weight (unit: g) of the sample. T (60%) is a temperature, at which an area $S_2$ of a lower-temperature region (shown by hatching) obtained by dividing the above region by a straight line $L_1$ perpendicular to the temperature axis reaches 60% of the area $S_1$, as shown in Fig. 2.

(2) Components of polyethylene resin

The polyethylene resin may be a single substance or a composition of two or more types of polyethylene, as long as its T (60%) is within the above range. The polyethylene resin is preferably (a) ultra-high-molecular-weight polyethylene, (b) polyethylene other than the ultra-high-molecular-weight polyethylene, or (c) a mixture of the ultra-high-molecular-weight polyethylene and another polyethylene (polyethylene composition). In any case, the mass-average molecular weight (Mw) of the polyethylene resin is preferably $1 \times 10^4$ to $1 \times 10^7$, more preferably $5 \times 10^4$ to $15 \times 10^6$, particularly $1 \times 10^5$ to $5 \times 10^6$, though not particularly critical.

(a) Ultra-high-molecular-weight polyethylene

The ultra-high-molecular-weight polyethylene has Mw of $7 \times 10^5$ or more. The ultra-high-molecular-weight polyethylene can be not only an ethylene homopolymer, but also an ethylene-$\alpha$-olefin copolymer containing a small amount of another $\alpha$-olefin. The other $\alpha$-olefins than ethylene are preferably propylene, butene-1, pentene-1, hexene-1, 4-methylpentene-1, octene-1, vinyl acetate, methyl methacrylate and styrene. The Mw of the ultra-high-molecular-weight polyethylene is preferably $1 \times 10^6$ to $15 \times 10^6$, more preferably $1 \times 10^6$ to $5 \times 10^6$.

(b) Polyethylene other than ultra-high-molecular-weight polyethylene

The polyethylene other than the ultra-high-molecular-weight polyethylene has Mw of $1 \times 10^4$ or more and less than $7 \times 10^5$, being preferably high-density polyethylene, medium-density polyethylene, branched low-density polyethylene and linear low-density polyethylene, more preferably high-density polyethylene. The polyethylene having Mw of $1 \times 10^4$ or more and less than $7 \times 10^5$ can be not only an ethylene homopolymer, but also a copolymer containing a small amount of another $\alpha$-olefin such as propylene, butene-1, hexene-1, etc. Such copolymers are preferably produced using single-site catalysts. The polyethylene other than the ultra-high-molecular-weight polyethylene can be not only a single substance, but also a mixture of two or more polyethylenes other than the ultra-high-molecular-weight polyethylene.

(c) Polyethylene composition

The polyolefin composition is a mixture of the ultra-high-molecular-weight polyethylene having Mw of $7 \times 10^5$ or more with the other polyethylene having Mw of $1 \times 10^4$ or more and less than $7 \times 10^5$ (at least one selected from the group consisting of high-density polyethylene, medium-density polyethylene, branched low-density polyethylene, and linear low-density polyethylene). The ultra-high-molecular-weight polyethylene and the other polyethylene can be the same as described above. The molecular weight distribution [mass-average molecular weight/number-average molecular weight (Mw/Mn)] of this polyethylene composition can easily be controlled depending on applications. The preferred polyethylene composition comprises the above ultra-high-molecular-weight polyethylene and high-density polyethylene. The high-density polyethylene used in the polyethylene composition has Mw of preferably $1 \times 10^5$ and less than $7 \times 10^5$, more preferably $1 \times 10^5$ to $5 \times 10^5$, most preferably $2 \times 10^5$ to $4 \times 10^5$. The amount of the ultra-high-molecular-weight polyethylene in the polyethylene composition is preferably 1 % by mass or more, more preferably 2 to 50% by mass, based on 100% by mass of the entire polyethylene composition.

(d) Molecular weight distribution Mw/Mn

Mw/Mn is a measure of the molecular weight distribution, and the larger this value is, the wider the molecular weight distribution is. The Mw/Mn of the polyethylene resin is preferably 5 to 300, more preferably 10 to 100, though not critical, in any case where the polyethylene resin is either one of the above (a) to (c). When the Mw/Mn is less than 5, there are excessive high-molecular weight components, resulting in difficulty in melt extrusion. When the Mw/Mn is more than 300, there are excessive low-molecular weight components, resulting in a microporous membrane with decreased strength. The Mw/Mn of polyethylene (homopolymer or ethylene-$\alpha$-olefin copolymer) can properly be controlled by multi-stage polymerization. The multi-stage polymerization method is preferably a two-stage polymerization method comprising forming a high-molecular-weight polymer component in the first stage and forming a low-molecular-weight polymer component in the second stage. In the case of the polyethylene composition, the larger the Mw/Mn, the larger difference in Mw between the ultra-high-molecular-weight polyethylene and the other polyethylene, and vice versa. The Mw/Mn of the polyethylene composition can be properly controlled by the molecular weight and percentage of each component.

(3) Addable resins

The polyolefin resin may contain a polyolefin other than polyethylene or a resin other than the polyolefin in a range not deteriorating the effect of this invention. Accordingly, it should be noted that the term "polyolefin resin" includes not only a polyolefin but also a resin other than the polyolefin. The polyolefin other than polyethylene can be at least one selected from the group consisting of polypropylene, polybutene-1, polypentene-1, polyhexene-1, poly-4-methylpentene-1, polyoctene-1, polyvinyl acetate, polymethyl methacrylate, polystyrene and ethylene-$\alpha$-olefin copolymers each having Mw of $1 \times 10^4$ to $4 \times 10^6$, and a polyethylene wax having Mw of $1 \times 10^3$ to $1 \times 10^4$. Polypropylene, polybutene-

1, polypentene-1, polyhexene-1, poly-4-methylpentene-1, polyoctene-1, polyvinyl acetate, polymethyl methacrylate and polystyrene may be homopolymers or copolymers containing other α-olefins.

The resin other than the polyolefin includes a heat-resistant resin having a melting point or glass transition temperature (Tg) of 150°C or higher. The heat-resistant resin is preferably a crystalline resin (including partially crystalline resin) having a melting point of 150°C or higher, or an amorphous resin having Tg of 150°C or higher. The melting point and Tg can be measured according to JIS K7121.

Because a battery separator formed by a microporous polyolefin membrane comprising the first polyethylene resin containing the heat-resistant resin has an improved meltdown temperature, batteries are provided with improved high-temperature storage stability. Though not particularly critical, the upper limit of the melting point or Tg of the heat-resistant resin is preferably 350°C or lower from the aspect of easy blending with the first polyethylene resin. The melting point or Tg of the heat-resistant resin is more preferably 170 to 260°C.

Specific examples of the heat-resistant resin include polyesters such as polybutylene terephthalate (melting point: about 160 to 230°C) and polyethylene terephthalate (melting point: about 250 to 270°C), fluororesins, polyamides (melting point: 215 to 265°C), polyarylene sulfides, isotactic polystyrene (melting point: 230°C), polyimides (Tg: 280°C or higher), polyamideimides (Tg: 280°C), polyethersulfone (Tg: 223°C), polyetheretherketone (melting point: 334°C), polycarbonates (melting point: 220 to 240°C), cellulose acetate (melting point: 220°C), cellulose triacetate (melting point: 300°C), polysulfone (Tg: 190°C), polyetherimides (melting point: 216°C), etc. The heat-resistant resin can be composed of a single resin component or pluralities of resin components.

The heat-resistant resin content is preferably 3 to 30% by mass, more preferably 5 to 25% by mass, based on 100% by mass of the total charging speed of the polyethylene resin and the heat-resistant resin. When this content is more than 30% by mass, the membrane has low pin puncture strength, tensile rupture strength and flatness.

[2] Inorganic fillers

Inorganic fillers may be added to the polyolefin resin in a range not deteriorating the effect of this invention. The inorganic fillers include silica, alumina, silica-alumina, zeolite, mica, clay, kaolin, talc, calcium carbonate, calcium oxide, calcium sulfate, barium carbonate, barium sulfate, magnesium carbonate, magnesium sulfate, magnesium oxide, diatomaceous earth, glass powder, aluminum hydroxide, titanium dioxide, zinc oxide, satin white, acid clay, etc. The inorganic fillers can be used alone or in combination. Among them, silica or calcium carbonate is preferably used.

[3] Production method of microporous polyolefin membrane

The production method of the microporous polyolefin membrane of this invention comprises the steps of (1) melt-blending the above polyolefin resin with a membrane-forming solvent, to prepare a polyolefin resin solution, (2) extruding the polyolefin resin solution through a die, (3) cooling the resultant extrudate to form a gel-like sheet, (4) removing the membrane-forming solvent, and (5) drying the resultant membrane. Between the steps (3) and (4), any one of a stretching step (6), a hot roll treatment step (7), a hot solvent treatment step (8) and a heat-setting step (9) can be conducted, if necessary. After the step (5), a microporous-membrane-stretching step (10), a heat treatment step (11), a cross-linking step (12) with ionizing radiations, a hydrophilizing step (13), a surface coating step (14), etc. can be conducted.

(1) Preparation of polyolefin resin solution

The polyolefin resin and a proper membrane-forming solvent are melt-blended to prepare a polyolefin resin solution. The polyolefin resin solution can contain various additives such as the above inorganic fillers, antioxidants, ultraviolet absorbents, antiblocking agents, pigments, dyes, etc., if necessary, in ranges not deteriorating the effects of this invention. Fine silicate powder, for instance, can be added as a pore-forming agent.

The membrane-forming solvent can be liquid or solid. The liquid solvents can be aliphatic or cyclic hydrocarbons such as nonane, decane, decalin, p-xylene, undecane, dodecane, liquid paraffin, etc.; and mineral oil distillates having boiling points corresponding to those of the above hydrocarbons. To obtain a gel-like sheet having a stable liquid solvent content, non-volatile liquid solvents such as liquid paraffin are preferable. The solid solvent preferably has melting point of 80°C or lower. Such solid solvents are paraffin wax, ceryl alcohol, stearyl alcohol, dicyclohexyl phthalate, etc. The liquid solvent and the solid solvent can be used in combination.

The viscosity of the liquid solvent is preferably 30 to 500 cSt, more preferably 30 to 200 cSt, at 25°C. When the viscosity at 25°C is less than 30 cSt, the solution is easily foamed, resulting in difficulty in blending. The viscosity of more than 500 cSt makes the removal of the liquid solvent difficult.

The polyolefin resin solution is prepared, such that it has an angular frequency $\omega_0$ of 0.1 rad/sec or more, at which a storage modulus (G') and a loss modulus (G") obtained by melt viscoelasticity measurement at a constant temperature in a range of 160 to 220°C are equal to each other, and a complex viscosity $\eta^*(0.01)$ of $1 \times 10^4$ Pa·s or more at an angular frequency of 0.01 rad/sec in the melt viscoelasticity measurement.

When the $\omega_0$ of the polyolefin resin solution is less than 0.1 rad/sec, a lithium battery separator formed by the microporous polyolefin membrane has such a low meltdown temperature that it is likely to cause short-circuiting of electrodes because of temperature elevation after the shutdown. The polyolefin resin solution preferably has $\omega_0$ of 1 to 20 rad/sec.

The $\omega_0$ of the polyolefin resin solution is a parameter affected mainly by the properties of the polyethylene resin, such as a mass-average molecular weight (Mw), a molecular weight distribution, a branching ratio, the molecular weight of branched chains, the distribution of branching points, the degree of entanglement of molecules, the molecular weight between the entangling points of molecules, etc. The $\omega_0$ is also affected by the ratio of the polyolefin resin to the membrane-forming solvent. In general, in case of linear polyethylene having a log-normal molecular weight distribution, the larger the Mw, the smaller the $\omega_0$. Polyethylene having linear branches has small $\omega_0$.

The $\omega_0$ was measured under the following conditions using a commercially available melt viscoelasticity meter (RheoStress-300 available from Haake).
Temperature: constant in a range of 160 to 220°C,
Fixing jig: parallel plate (diameter: 8 mm),
Gap (sample thickness): 0.3 mm,
Angular frequency range measured: 0.01 to 100 rad/s,
Strain ($\gamma$): 0.5%,
Sample: a disc plate having a diameter of 8 mm and a thickness of 0.5 mm was cut out from a gel-like sheet obtained by extruding the polyolefin resin solution through a die and cooling it, stabilized at a measurement temperature, and then compressed to a thickness of 0.3 mm.

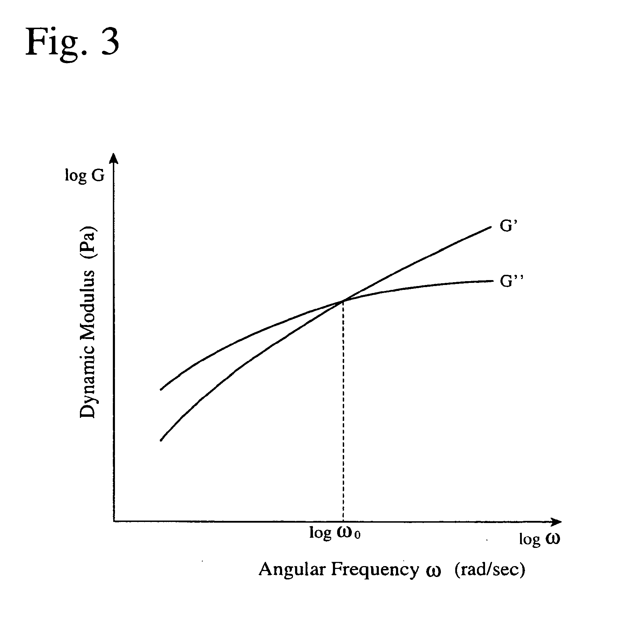

The response of G' and G" to an angular frequency $\omega$ was measured under the above conditions to depict a log $\omega$-log G' curve and a log $\omega$-log G" curve as shown in Fig. 3. An angular frequency at the intersection of these curves was regarded as $\omega_0$.

When the $\eta^*(0.01)$ of the polyolefin resin solution is less than $1 \times 10^4$ Pa·s, a lithium battery separator formed by the microporous polyolefin membrane has low melting shrinkage resistance and meltdown properties, and poor rupture resistance during temperature elevation after the shutdown. The $\eta^*(0.01)$ of the polyolefin resin solution is preferably $1.5 \times 10^4$ Pa·s or more. Though not particularly critical, the upper limit of the $\eta^*(0.01)$ of the polyolefin resin solution is preferably 40,000 Pa·s or less to obtain good melting shrinkage resistance.

Using G'(0.01) and G"(0.01) obtained in the above melt viscoelasticity measurement at an angular frequency of 0.01 rad/sec, the $\eta^*(0.01)$ of the polyolefin resin solution was calculated by the following formula (1):

$$\eta^{\bullet}(0.01) = [G'(0.01)^2 + G''(0.01)^2]^{1/2}/0.01 \ ... \ (1).$$

In order that the polyolefin resin solution have $\omega_0$ of 0.1 rad/sec or more and $\eta^*(0.01)$ of $1 \times 10^4$ Pa·s or more, melt-blending is conducted in a double-screw extruder, and a ratio Q/Ns of the total amount Q (kg/h) of the polyolefin resin and the membrane-forming solvent introduced into the double-screw extruder to the screw rotation speed Ns (rpm) is 0.1 to 0.55 kg/h/rpm. When the Q/Ns is less than 0.1 kg/h/rpm, the polyolefin resin is too much sheared, providing the polyolefin resin solution with $\omega_0$ of less than.0.1 rad/sec and $\eta^*(0.01)$ of less than $1 \times 10^4$ Pa·s, which leads to decrease in strength and meltdown temperature. When the Q/Ns is more than 0.55 kg/h/rpm, uniform blending cannot be achieved. The ratio Q/Ns is more preferably 0.2 to 0.5 kg/h/rpm. The screw rotation speed Ns is preferably 180 rpm or more, more preferably 250 rpm or more. The upper limit of the screw rotation speed Ns is preferably 500 rpm, though not particularly critical.

The double-screw extruder may be an intermeshing, co-rotating, double-screw extruder, an intermeshing, counter-rotating, double-screw extruder, a non-intermeshing, co-rotating, double-screw extruder, or a non-intermeshing, counter-rotating, double-screw extruder. The intermeshing, co-rotating, double-screw extruder is preferable from the aspect of self-cleaning, and a larger number of rotation with a smaller load than the counter-rotating, double-screw extruder.

The ratio (L/D) of a screw length L to a screw diameter D in the double-screw extruder is preferably 20 to 100, more preferably 35 to 70. When L/D is less than 20, the melt-blending is insufficient When L/D is more than 100, the residing time of the polyolefin resin solution is too long. The shape of the screw is not particularly restricted, but may be a known one. The cylinder of the double-screw extruder preferably has an inner diameter of 40 to 100 mm.

The melt-blending temperature of the polyolefin resin solution may properly be determined depending on the components of the polyolefin resin, and generally in a range from the melting point Tm of the polyolefin resin + 10°C to Tm + 110°C. The melting point Tm of the polyolefin resin is the melting point of (a) the ultra-high-molecular-weight polyethylene, (b) the polyethylene other than the ultra-high-molecular-weight polyethylene, or (c) the polyethylene composition, when the polyolefin resin is any one of them. When the polyolefin resin is a composition comprising the polyolefin other than polyethylene or the heat-resistant resin, it is the melting point of the ultra-high-molecular-weight polyethylene, the other polyethylene or the polyethylene composition, which is contained in the above composition. The ultra-high-molecular-weight polyethylene, the other polyethylene, and the polyethylene composition have melting points of about 130 to 140°C. Accordingly, the melt-blending temperature is preferably 140 to 250°C, more preferably 170 to 240°C.

The membrane-forming solvent may be added before the start of blending or introduced into the double-screw extruder at an intermediate point during blending, through the latter is preferable. In the melt blending, the antioxidant is preferably added to prevent the oxidation of the polyolefin resin.

The concentration of the polyolefin resin is 10 to 50% by mass, preferably 20 to 45% by mass, based on 100% by mass of the total charging speed of the polyolefin resin and the membrane-forming solvent. Less than 10% by mass of the polyolefin resin undesirably lowers productivity. In addition, large swelling and neck-in occur at the die exit in the extrusion of the polyolefin resin solution, resulting in decrease in the formability and self-supportability of the extrudate. More than 50% by mass of the polyolefin resin lowers the formability of the extrudate.

(2) Extrusion

The melt-blended polyolefin resin solution is extruded through a die directly or indirectly from the extruder. Alternatively, it may be cooled to pellets, introduced into the extruder again, and then extruded through the die. Although a sheet-forming die having a rectangular orifice is usually used, a double-cylindrical, hollow die, an inflation die lip, etc. can also be used. The sheet-forming die usually has a die gap of 0.1 to 5 mm, and is heated at 140 to 250°C during extrusion. The extrusion speed of the heated solution is preferably 0.2 to 15 m/minute.

(3) Formation of gel-like sheet

An extrudate exiting from the die is cooled to provide a gel-like sheet. The cooling is preferably conducted to at least a gelation temperature at a speed of 50°C/minute or more. Such cooling fixes microphase separation between the polyolefin resin and the membrane-forming solvent, thereby providing a fixed gel structure comprising a polyolefin resin phase and a membrane-forming solvent phase. The cooling is preferably conducted to 25°C or lower. In general, a low cooling speed provides the gel-like sheet with a coarse high-order structure having large pseudo-cell units, while a high cooling speed provides dense cell units. The cooling speed of less than 50°C/minute increases crystallization, making it difficult to form a stretchable gel-like sheet. The cooling method can be a method of bringing the extrudate into contact with a cooling medium such as cooling air, cooling water, etc., a method of bringing the extrudate into contact with a cooling roll, etc., and the cooling method using a cooling roll is preferable.

(4) Removal of membrane-forming solvent

The liquid solvent is removed (washed away) using a washing solvent. Because the polyolefin resin phase is separated from the membrane-forming solvent phase in the gel-like sheet, the removal of the liquid solvent provides a microporous membrane. The removal (washing away) of the liquid solvent can be conducted by using a known washing solvent. The washing solvents can be volatile solvents, for instance, saturated hydrocarbons such as pentane, hexane, heptane, etc.; chlorinated hydrocarbons such as methylene chloride, carbon tetrachloride, etc.; ethers such as diethyl ether, dioxane, etc.; ketones such as methyl ethyl ketone, etc.; linear fluorocarbons such as trifluoroethane, $C_6F_{14}$, $C_7F_{16}$, etc.; cyclic hydrofluorocarbons such as $C_5H_3F_7$, etc.; hydrofluoroethers such as $C_4F_9OCH_3$, $C_4F_9OC_2H_5$, etc.; and perfluoroethers such as $C_4F_9OCF_3$, $C_4F_9OC_2F_5$, etc. These washing solvents have a low surface tension, for instance, 24 mN/m or less at 25°C. The use of a washing solvent having a low surface tension suppresses a pore-forming network structure from shrinking due to a surface tension of gas-liquid interfaces during drying after washing, thereby providing a microporous membrane having high porosity and permeability.

The washing of the membrane can be conducted by a washing-solvent-immersing method, a washing-solvent-showering method, or a combination thereof. The amount of the washing solvent used is preferably 300 to 30,000 parts by mass, per 100 parts by mass of the membrane before washing. Washing with the washing solvent is preferably conducted until the amount of the remaining liquid solvent becomes less than 1% by mass of that added.

(5) Drying of membrane

The microporous polyolefin membrane obtained by removing the membrane-forming solvent is then dried by a heat-drying method, a wind-drying method, etc. The drying temperature is preferably equal to or lower than the crystal dispersion temperature Tcd of the polyolefin resin, particularly 5°C or more lower than the Tcd.

The crystal dispersion temperature Tcd of the polyolefin resin is the crystal dispersion temperature of (a) the ultra-high-molecular-weight polyethylene, (b) the polyethylene other than the ultra-high-molecular-weight polyethylene, or (c) the polyethylene composition, when the polyolefin resin is any one of them. When the polyolefin resin is a composition containing the polyolefin other than polyethylene or the heat-resistant resin, it is the crystal dispersion temperature of the ultra-high-molecular-weight polyethylene, the other polyethylene or the polyethylene composition, which is contained in the above composition. The crystal dispersion temperature is determined by the measurement of the temperature characteristics of dynamic viscoelasticity according to ASTM D 4065. The ultra-high-molecular-weight polyethylene, the polyethylene other than the ultra-high-molecular-weight polyethylene and the polyethylene composition have crystal dispersion temperatures of about 90 to 100°C.

Drying is conducted until the percentage of the remaining washing solvent becomes preferably 5% or less by mass, more preferably 3% or less by mass, based on 100% by mass of the microporous membrane (dry weight). Insufficient drying undesirably reduces the porosity of the microporous membrane when heat-treated subsequently, thereby resulting in poor permeability.

(6) Stretching

The gel-like sheet before washing is preferably stretched at least monoaxially. After heating, the gel-like sheet is preferably stretched to a predetermined magnification by a tenter method, a roll method, an inflation method, a rolling method, or their combination. Because the gel-like sheet contains a membrane-forming solvent, it can be uniformly stretched. The stretching is particularly preferable when used for battery separators, because it improves the mechanical strength and expands pores. Although the stretching can be monoaxial or biaxial, biaxial stretching is preferable. The biaxial stretching can be simultaneous biaxial stretching, sequential stretching, or multi-stage stretching (for instance, a combination of simultaneous biaxial stretching and sequential stretching), though the simultaneous biaxial stretching is particularly preferable.

The stretching magnification is preferably 2-fold or more, more preferably 3- to 30-fold in the case of monoaxial stretching. In the case of biaxial stretching, it is at least 3-fold in both directions, preferably with an area magnification of 9-fold or more. The area magnification of less than 9-fold results in insufficient stretching, failing to provide a high-modulus, high-strength microporous membrane. When the area magnification is more than 400-fold, restrictions occur on stretching apparatuses, stretching operations, etc. The upper limit of the area magnification is preferably 50-fold.

The stretching temperature is preferably equal to or lower than the melting point Tm of the polyolefin resin + 10°C, more preferably in a range of the crystal dispersion temperature Tcd or higher and lower than the melting point Tm. When this stretching temperature exceeds Tm + 10°C, the polyethylene resin is molten, so that stretching fails to orient molecular chains. When it is lower than Tcd, the polyethylene resin is insufficiently softened, making it likely that the membrane is broken by stretching, thus failing to achieve high-magnification stretching. As described above, the polyethylene resin has a crystal dispersion temperature of about 90 to 100°C. Accordingly, the stretching temperature is usually in a range of 90 to 140°C, preferably in a range of 100 to 130°C.

The stretching speed is preferably 1 to 80%/second. In the case of monoaxial stretching, it is 1 to 80%/second in a longitudinal direction (MD) or a transverse direction (TD). In the case of biaxial stretching, it is 1 to 80%/second in both MD and TD. The stretching speed (%/second) is a percentage of the elongation of the gel-like sheet per 1 second relative to the length (100%) before stretching. When the stretching speed is less than 1 %/second, stable stretching cannot be conducted. When the stretching speed is more than 80%/second, the melting shrinkage resistance decreases. The stretching speed is more preferably 2 to 70%/second. In case of biaxial stretching, the stretching speed may be different in MD and TD as long as it is within 1 to 80%/second in each of MD and TD, though the same stretching speed is preferable.

The above stretching causes cleavage between polyethylene crystal lamellas, making the polyethylene phase (the ultra-high-molecular-weight polyethylene, the other polyethylene or the polyethylene composition) finer with larger numbers of fibrils. The fibrils form a three-dimensional network structure (three-dimensionally and irregularly connected network structure).

Depending on the desired properties, stretching can be conducted with a temperature distribution in a thickness direction, to provide a microporous membrane with higher mechanical strength. This method is described specifically in Japanese Patent 3347854.

(7) Hot roll treatment

At least one surface of the gel-like sheet can be brought into contact with a heat roll to provide the microporous membrane with improved compression resistance. This method is specifically described, for instance, in WO-A-2007 032 450.

(8) Hot solvent treatment

The gel-like sheet can be treated with a hot solvent to provide the microporous membrane with improved mechanical strength and permeability. This method is specifically described in WO 2000/20493.

(9) Heat setting

The stretched gel-like sheet can be heat-set. This method is specifically described, for instance, in JP 2002-256099 A.

(10) Stretching of microporous membrane

The dried microporous polyolefin membrane can be stretched at least monoaxially in a range not deteriorating the effect of this invention. This stretching can be conducted by a tenter method, etc. while heating the membrane, in the same manner as described above.

The temperature of stretching the microporous membrane is preferably equal to or lower than the melting point Tm of the polyolefin resin, more preferably in a range of the Tcd to the Tm. Specifically, it is in a range of 90 to 135°C, preferably in a range of 95 to 130°C. In the case of biaxial stretching, it is preferably 1.1- to 2.5-fold, more preferably 1.1- to 2.0-fold, at least monoaxially. When this magnification is more than 2.5-fold, the shutdown temperature may be deteriorated.

(11) Heat treatment

The dried membrane is preferably heat-set and/or annealed by known methods. They may be properly selected depending on properties required on the microporous polyolefin membrane. The heat treatment stabilizes crystals and makes lamellas uniform.

(12) Cross-linking of membrane

The dried microporous polyolefin membrane can be cross-linked by ionizing radiation of α-rays, β-rays, γ-rays, electron beams, etc. The electron beam irradiation is preferably conducted at 0.1 to 100 Mrad and accelerating voltage of 100 to 300 kV. The cross-linking treatment elevates the meltdown temperature of the microporous membrane.

(13) Hydrophilizing

The dried microporous polyolefin membrane can be hydrophilized by a monomer-grafting treatment, a surfactant treatment, a corona-discharging treatment, a plasma treatment, etc., which are known.

(14) Surface coating

The dried microporous polyolefin membrane can be coated with a porous fluororesin such as polyvinylidene fluoride and polytetrafluoroethylene, porous polyimide, porous polyphenylene sulfide, etc., to improve meltdown properties when used as a battery separator. A coating layer comprising polypropylene may be formed on at least one surface of the dried microporous polyolefin membrane. The containing polypropylene is described, for instance, in WO2005-054350.

[4] Properties of microporous polyolefin membrane

The microporous polyolefin membrane has the following properties.

(1) Shutdown temperature of 135°C or lower

When the shutdown temperature is higher than 135°C, a lithium battery separator formed by the microporous polyolefin membrane has low shutdown response when overheated.

(2) Maximum melting shrinkage ratio of 40% or less

When the maximum melting shrinkage ratio (maximum dimensional change ratio) measured by thermomechanical analysis in a temperature range of 135 to 145°C under a load of 2 gf and at a temperature-elevating speed of 5°C/minute exceeds 40% in a transverse direction, a lithium battery separator formed by the microporous polyolefin membrane shrinks by heat generated in the battery, so that short-circuiting is highly likely to occur in its end portions. The maximum melting shrinkage ratio is preferably 35% or less.

(3) Meltdown temperature of 150°C or higher

When the meltdown temperature is lower than 150°C, the microporous membrane has poor rupture resistance during temperature elevation after the shutdown.

The microporous polyolefin membrane according to a preferred embodiment of this invention also has the following properties.

(4) Air permeability of 20 to 800 sec/100 cm$^3$ (converted to the value at 20-$\mu$m thickness)

When the air permeability is 20 to 800 sec/100 cm$^3$ (converted to the value at 20-$\mu$m thickness), a separator formed by microporous polyolefin membrane provides a battery with large capacity and good cycle characteristics. When the air permeability is less than 20 sec/100 cm$^3$, shutdown does not occur sufficiently when the temperature elevates in the battery.

(5) Porosity of 25 to 80%

With the porosity of less than 25%, the microporous polyolefin membrane does not have good air permeability. When the porosity exceeds 80%, the microporous polyolefin membrane used as a battery separator does not have enough strength, resulting in a high likelihood of short-circuiting between electrodes.

(6) Pin puncture strength of 3,000 mN/20 $\mu$m or more

With the pin puncture strength of less than 3,000 mN/20 $\mu$m, a battery comprising the microporous polyolefin membrane as a separator likely suffers short-circuiting between electrodes.

(7) Tensile rupture strength of 60,000 kPa or more

With the tensile rupture strength of 60,000 kPa or more in both MD and TD, the microporous membrane is unlikely ruptured when used as a battery separator.

(8) Tensile rupture elongation of 60% or more

When the tensile rupture elongation is 60% or more in both MD and TD, a battery separator formed thereby is unlikely to be ruptured.

(9) Shutdown start temperature of 130°C or lower

When the shutdown start temperature is higher than 130°C, a lithium battery separator formed by the microporous polyolefin membrane has low shutdown response when overheated.

(10) Air permeability change ratio of 9,000 sec/100 cm$^3$/°C or more

The air permeability change ratio after the start of shutdown is 9,000 sec/100 cm$^3$/°C or more. When the air permeability change ratio is less than 9,000 sec/100 cm$^3$/°C, a lithium battery separator formed by the microporous polyolefin membrane has low shutdown response when overheated. The air permeability change ratio is preferably 12,000 sec/100 cm$^3$/°C or more.

Thus, the microporous polyolefin membrane according to a preferred embodiment of this invention has an excellent balance of shutdown properties, melting shrinkage resistance and meltdown properties, as well as excellent permeability and mechanical properties.

[5] Battery separator

The thickness of a battery separator formed by the microporous polyolefin membrane of this invention is preferably 5 to 50 μm, more preferably 7 to 35 μm, though properly selectable depending on the types of batteries.

[6] Battery

The microporous polyolefin membrane of this invention can be used preferably as a separator for secondary batteries such as nickel-hydrogen batteries, nickel-cadmium batteries, nickel-zinc batteries, silver-zinc batteries, lithium secondary batteries, lithium polymer secondary batteries, etc., particularly as a separator for lithium secondary batteries. Taking the lithium secondary battery for example, description will be made below.

The lithium secondary battery comprises a cathode and an anode laminated via a separator, the separator containing an electrolytic solution (electrolyte). The electrode can be of any known structure, not particularly critical. The electrode structure can be, for instance, a coin type in which disc-shaped cathode and anode are opposing, a laminate type in which planar cathode and anode are alternately laminated, a toroidal type in which ribbon-shaped cathode and anode are wound, etc.

The cathode usually comprises (a) a current collector, and (b) a cathodic active material layer capable of absorbing and discharging lithium ions, which is formed on the current collector. The cathodic active materials can be inorganic compounds such as transition metal oxides, composite oxides of lithium and transition metals (lithium composite oxides), transition metal sulfides, etc. The transition metals can be V, Mn, Fe, Co, Ni, etc. Preferred examples of the lithium composite oxides are lithium nickelate, lithium cobaltate, lithium manganate, laminar lithium composite oxides having an $\alpha$-NaFeO$_2$ structure, etc. The anode comprises (a) a current collector, and (b) an anodic active material layer formed on the current collector. The anodic active materials can be carbonaceous materials such as natural graphite, artificial graphite, cokes, carbon black, etc.

The electrolytic solutions can be obtained by dissolving lithium salts in organic solvents. The lithium salts can be LiClO$_4$, LiPF$_6$, LiAsF$_6$, LiSbF$_6$, LiBF$_4$, LiCF$_3$SO$_3$, LiN(CF$_3$SO$_2$)$_2$, LiC(CF$_3$SO$_2$)$_3$, Li$_2$B$_{10}$Cl$_{10}$, LiN(C$_2$F$_5$SO$_2$)$_2$, LiPF$_4$(CF$_3$)$_2$, LiPF$_3$(C$_2$F$_5$)$_3$, lower aliphatic carboxylates of lithium, LiAlCl$_4$, etc. The lithium salts can be used alone or in combination. The organic solvents can be organic solvents having high boiling points and high dielectric constants, such as ethylene carbonate, propylene carbonate, ethylmethyl carbonate, γ-butyrolactone, etc.; organic solvents having low boiling points and low viscosity, such as tetrahydrofuran, 2-methyltetrahydrofuran, dimethoxyethane, dioxolane, dimethyl carbonate, diethyl carbonate, etc. These organic solvents can be used alone or in combination. Because organic solvents having high dielectric constants have high viscosity, while those having low viscosity have low dielectric constants, their mixtures are preferably used.

When the battery is assembled, the separator can be impregnated with the electrolytic solution, so that the separator (microporous polyolefin membrane) is provided with ion permeability. The impregnation treatment is usually conducted by immersing the microporous polyolefin membrane in the electrolytic solution at room temperature. When a cylindrical battery is assembled, for instance, a cathode sheet, a separator formed by the microporous polyolefin membrane, and an anode sheet are laminated in this order, and the resultant laminate is wound to a toroidal-type electrode assembly. The resulting electrode assembly can be charged into a battery can and impregnated with the above electrolytic solution. A battery lid acting as a cathode terminal equipped with a safety valve can be caulked to the battery can via a gasket to produce a battery.

This invention will be described in more detail with reference to Examples below without intention of restricting the scope of this invention.

Example 1

100 parts by mass of a polyethylene (PE) composition comprising 30% by mass of ultra-high-molecular-weight polyethylene (UHMWPE) having a mass-average molecular weight (Mw) of 2.5 x 10$^6$, and 70% by mass of high-density polyethylene (HDPE) having Mw of 2.8 x 10$^5$ were dry-blended with 0.375 parts by mass of tetrakis[methylene-3-(3,5-ditertiary-butyl-4-hydroxyphenyl)-propionate] methane. Measurement revealed that the PE composition comprising UHMWPE and HDPE had T (60%) of 134.3°C, a melting point of 135°C, and a crystal dispersion temperature of 100°C.

The Mws of UHMWPE and HDPE were measured by a gel permeation chromatography (GPC) method under the flowing conditions.

Measurement apparatus: GPC-150C available from Waters Corporation,

Column: Shodex UT806M available from Showa Denko K.K.,

Column temperature: 135°C,

Solvent (mobile phase): o-dichlorobenzene,

Solvent flow rate: 1.0 ml/minute,

Sample concentration: 0.1% by weight (dissolved at 135°C for 1 hour),

Injected amount: 500 μl,

Detector: Differential Refractometer available from Waters Corp., and

Calibration curve: Produced from a calibration curve of a single-dispersion, standard polystyrene sample using a predetermined conversion constant.

30 parts by mass of the resultant mixture was charged into a strong-blending, double-screw extruder (inner diameter = 58 mm, L/D = 42), and 70 parts by mass of liquid paraffin was supplied to the double-screw extruder via its side feeder. The total charging speed Q of the polyethylene composition and the liquid paraffin was 90 kg/h. Melt blending was conducted at a temperature of 210°C while keeping the rotation speed Ns of the screw at 300 rpm (Q/Ns: 0.3 kg/h/rpm), to prepare a polyethylene solution in the extruder. Measurement revealed that the polyethylene solution had $\omega_0$ of 9.8 rad/sec and $\eta^*(0.01)$ of 26,000 Pa·s at 180°C.

The polyethylene solution was supplied from the double-screw extruder to a T-die, and extruded in a 1.0-mm-thick sheet shape. The extrudate was cooled by a cooling roll controlled at 50°C to form a gel-like sheet. The gel-like sheet was simultaneously biaxially stretched to 5-fold at a speed of 20%/second in both MD and TD by a batch-type stretching machine at 116°C. Fixed to an aluminum frame plate of 30 cm x 30 cm, the stretched gel-like sheet was immersed in a washing bath of methylene chloride controlled at 25°C, and washed while swaying at 100 rpm for 3 minutes to remove the liquid paraffin. The washed membrane was air-dried at room temperature. Fixed to a tenter, the dried membrane was heat-set at 125°C for 10 minutes to produce a microporous polyethylene membrane.

Example 2

A microporous polyethylene membrane was produced in the same manner as in Example 1, except that a polyethylene solution having $\omega_0$ of 12 rad/sec and $\eta^*(0.01)$ of 18,000 Pa·s was prepared such that a ratio of the total charging speed Q of the polyethylene composition and the liquid paraffin to a screw rotation speed Ns was 0.15.

Example 3

A microporous polyethylene membrane was produced in the same manner as in Example 1, except that a polyethylene solution having $\omega_0$ of 8.5 rad/sec and $\eta^*(0.01)$ of 32,000 Pa·s was prepared such that a ratio of the total charging speed Q of the polyethylene composition and the liquid paraffin to a screw rotation speed Ns was 0.45.

Example 4

A polyethylene solution having $\omega_0$ of 13 rad/sec and $\eta^*(0.01)$ of 17,000 Pa·s was prepared in the same manner as in Example 1 except for using a polyethylene composition comprising 20% by mass of UHMWPE and 80% by mass of HDPE and having T (60%) of 133.9°C. A microporous polyethylene membrane was produced from the polyethylene solution in the same manner as in Example 1.

Example 5

A polyethylene solution having $\omega_0$ of 2. rad/sec and $\eta^*(0.01)$ of 35,000 Pa·s was prepared in the same manner as in Example 1 except for using a polyethylene composition comprising 20% by mass of UHMWPE and 80% by mass of HDPE having Mw of $3.0 \times 10^5$ and having T (60%) of 132.9°C. A microporous polyethylene membrane was produced from the polyethylene solution in the same manner as in Example 1.

Comparative Example 1

A polyethylene solution having $\omega_0$ of 21 rad/sec and $\eta^*(0.01)$ of 15,000 Pa·s was prepared in the same manner as in Example 1 except for using a polyethylene composition comprising 30% by mass of UHMWPE having Mw of $2.2 \times 10^6$ and 70% by mass of HDPE having Mw of $3.0 \times 10^5$ and having T (60%) of 135.9°C. A microporous polyethylene membrane was produced from the polyethylene solution in the same manner as in Example 1.

Comparative Example 2

A microporous polyethylene membrane was produced in the same manner as in Example 5, except that the biaxial stretching speed was 100%/second in both MD and TD, and that the heat-setting temperature was 122°C.

Comparative Example 3

A polyethylene solution having $\omega_0$ of 55 rad/sec and $\eta^*(0.01)$ of 8,000 Pa·s was prepared in the same manner as in Example 5, except that the ratio of the total charging speed Q of the polyethylene composition and the liquid paraffin to a screw rotation speed Ns was 0.05. A microporous polyethylene membrane was produced from the polyethylene solution in the same manner as in Example 5 except that the heat-setting temperature was 122°C.

Comparative Example 4

A polyethylene solution was prepared in the same manner as in Example 5 except that the ratio of the total charging speed Q of the polyethylene composition and the liquid paraffin to a screw rotation speed Ns was 0.6, but it was not a uniform blend.

The properties of the microporous polyethylene membranes obtained in Examples 1 to 5 and Comparative Examples 1 to 4 were measured by the following methods. The results are shown in Table 1.

(1) Average thickness ($\mu$m)

The thickness of the microporous polyethylene membrane was measured at a 5-mm interval over a width of 30 cm by a contact thickness meter, and the measured thickness was averaged.

(2) Air permeability (sec/100 cm$^3$/20 $\mu$m)

The air permeability $P_1$ of the microporous membrane having a thickness $T_1$ was measured by an Oken-type air permeability meter (EGO-1T available from Asahi Seiko Co., Ltd.), and converted to air permeability $P_2$ at a thickness of 20 $\mu$m by the formula of $P_2 = (P_1 \times 20)/T_1$.

(3) Porosity (%)

It was measured by a mass method.

(4) Pin puncture strength (mN/20 $\mu$m)

The maximum load was measured when a microporous membrane having a thickness $T_1$ was pricked with a needle of 1 mm in diameter with a spherical end surface (radius R of curvature: 0.5 mm) at a speed of 2 mm/second. The measured maximum load $L_a$ was converted to the maximum load $L_b$ at a thickness of 20 $\mu$m by the formula of $L_b$ = ($L_a$ x 20)/$T_1$, which was regarded as pin puncture strength.

(5) Tensile rupture strength and elongation

Measurement was conducted on a 10-mm-wide rectangular test piece according to ASTM D882.

(6) Shutdown temperature

The air permeability of a microporous polyethylene membrane was measured by an Oken-type air permeability meter (EGO-1T available from Asahi Seiko Co., Ltd.) at a temperature-elevating speed of 5°C/minute while heating, to find a temperature at which the air permeability reached the detection limit of 1 x $10^5$ sec/100 cm$^3$, which was regarded as a shutdown temperature ($T_{SD}$).

(7) Shutdown start temperature (Ts)

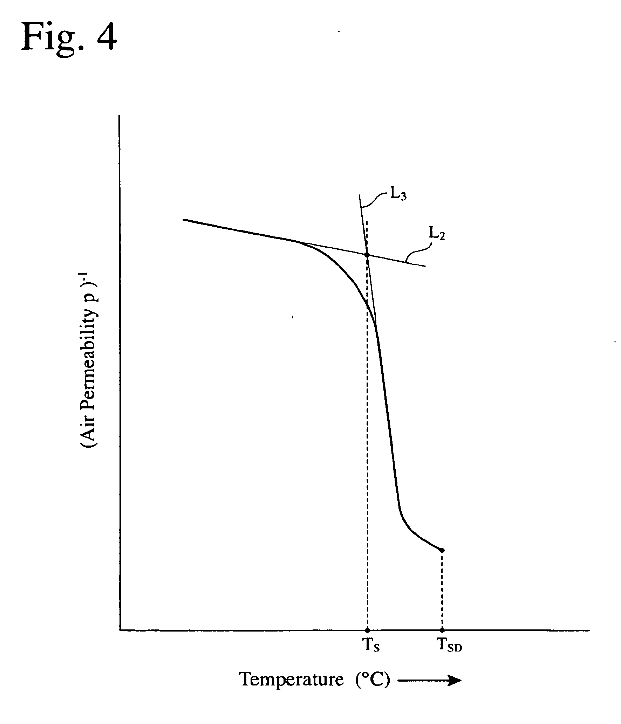

The data of the air permeability p to temperature T, which was obtained in the above shutdown temperature measurement, were used to prepare a curve representing the relation of a reciprocal of the air permeability p to temperature (shown in Fig. 4), and a shutdown start temperature ($T_S$) was determined from the curve at an intersection of an extension $L_2$ of a straight portion of the curve after the start of temperature elevation from room temperature and before the start of shutdown, and an extension $L_3$ of a straight portion of the curve after the start of shutdown and before reaching the shutdown temperature ($T_{SD}$).

(8) Air permeability change ratio after start of shutdown

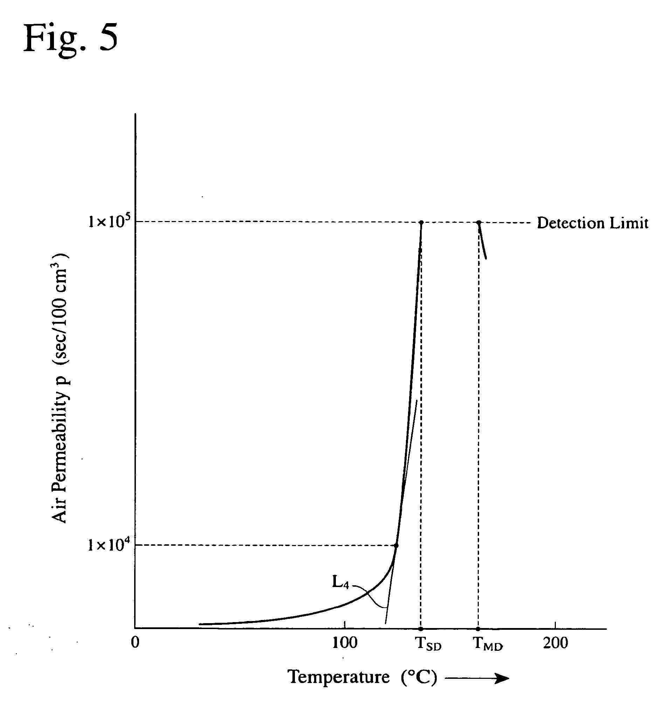

A temperature-air permeability curve as shown in Fig. 5 was prepared from the data of air permeability p to the temperature T obtained by the above shutdown temperature measurement, to determine the gradient of the curve (the inclination $\Delta p/\Delta T$ of a tangent $L_4$ in Fig. 5) at a temperature at which the air permeability was 1 x $10^4$ sec/100 cm$^3$, which was regarded as an air permeability change ratio.

(9) Maximum melting shrinkage ratio

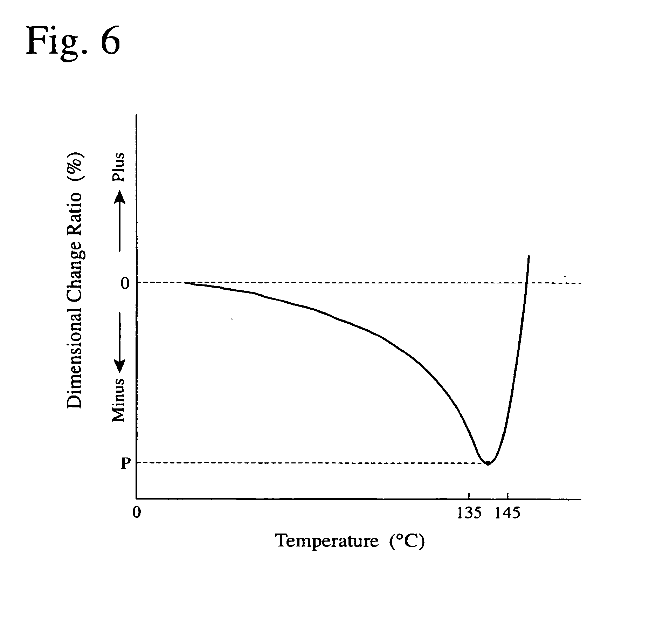

Using a thermomechanical analyzer (TMA/SS6000 available from Seiko Instruments, Inc.), a test piece of 10 mm (TD) x 3 mm (MD) was heated at a speed of 5°C/minute from room temperature while being longitudinally drawn under a load of 2 g to measure a dimensional change ratio relative to the size at 23°C, thereby preparing a temperature-dimensional change ratio curve shown in Fig. 6. The maximum shrinkage ratio P in a temperature range of 135 to 145°C was regarded as the maximum melting shrinkage ratio.

(10) Meltdown temperature

After reaching the above shutdown temperature, heating was continued at a temperature-elevating speed of 5°C/minute, to find a temperature at which the air permeability became 1 x $10^5$ sec/100 cm$^3$ again, which was regarded as a meltdown temperature ($T_{MD}$) (see Fig. 5).

Table 1

| No. | Example 1 | Example 2 | Example 3 | Example 4 |
|---|---|---|---|---|
| Resin Composition | | | | |
| PE Composition | | | | |
| UHMWPE $Mw^{(1)}$ | $2.5 \times 10^6$ | $2.5 \times 10^6$ | $2.5 \times 10^6$ | $2.5 \times 10^6$ |
| % by mass | 30 | 30 | 30 | 20 |
| HDPE $Mw^{(1)}$ | $2.8 \times 10^5$ | $2.8 \times 10^5$ | $2.8 \times 10^5$ | $2.8 \times 10^5$ |
| % by mass | 70 | 70 | 70 | 80 |
| T $(60\%)^{(2)}$ (°C) | 134.3 | 134.3 | 134.3 | 133.9 |
| Production Conditions | | | | |
| PE Solution | | | | |
| PE Concentration (% by mass) | 30 | 30 | 30 | 30 |
| Blending Conditions | | | | |
| $Q^{(3)}$ (kg/h) | 90 | 45 | 135 | 90 |
| $Ns^{(4)}$ (rpm) | 300 | 300 | 300 | 300 |
| Q/Ns (kg/h/rpm) | 0.3 | 0.15 | 0.45 | 0.3 |
| $\omega_0^{(5)}$ (rad/sec) | 9.8 | 12 | 8.5 | 13 |
| $\eta^*(0.01)^{(6)}$ (Pa·s) | 26,000 | 18,000 | 32,000 | 17,000 |
| Stretching | | | | |
| Temperature (°C) | 116 | 116 | 116 | 116 |
| Magnification (MD x TD) | 5 x 5 | 5 x 5 | 5 x 5 | 5 x 5 |
| Speed (%/sec) | 20 | 20 | 20 | 20 |
| Heat Setting | | | | |
| Temperature (°C) | 125 | 125 | 125 | 125 |
| Time (minute) | 10 | 10 | 10 | 10 |
| Properties of Microporous Membrane | | | | |
| Average Thickness (μm) | 19.7 | 20.3 | 19.6 | 21 |
| Air Permeability (sec/100 cm³) | 429 | 462 | 469 | 388 |
| Porosity (%) | 41 | 40 | 40 | 42 |
| Pin Puncture Strength (g/20 μm) | 516 | 524 | 511 | 464 |
| (mN/20 μm) | 5,056.8 | 5,135.2 | 5,007.8 | 4,547.2 |
| Tensile Rupture Strength (kg/cm²) MD | 1,490 | 1,480 | 1,510 | 1,250 |
| (kPa) MD | 146,020 | 145,040 | 147,980 | 122,500 |
| (kg/cm²) TD | 1,220 | 1,230 | 1,210 | 1,090 |
| (kPa) TD | 119,560 | 120,540 | 118,580 | 106,820 |
| Tensile Rupture Elongation (%) MD | 130 | 100 | 110 | 160 |
| (%) TD | 220 | 220 | 210 | 270 |
| Shutdown Start Temperature (°C) | 125.2 | 124.9 | 125.5 | 129.1 |
| Air Permeability Change Ratio (sec/100 cm³/°C) | 17,800 | 16,200 | 16,400 | 20,010 |
| Shutdown Temperature (°C) | 134.3 | 134.2 | 134.7 | 134 |
| Maximum Melting Shrinkage Ratio (%) TD | 30 | 27 | 35 | 26 |
| Meltdown Temperature (°C) | 158.6 | 156.9 | 158.9 | 156.9 |

## Table 1 (continued)

| No. | Example 5 | Comparative Example 1 | Comparative Example 2 | Comparative Example 3 |
|---|---|---|---|---|
| **Resin Composition** | | | | |
| **PE Composition** | | | | |
| UHMWPE Mw[(1)] | $2.5 \times 10^6$ | $2.2 \times 10^6$ | $2.5 \times 10^6$ | $2.5 \times 10^6$ |
| % by mass | 20 | 30 | 20 | 20 |
| HDPE Mw[(1)] | $3.0 \times 10^5$ | $3.0 \times 10^5$ | $3.0 \times 10^5$ | $3.0 \times 10^5$ |
| % by mass | 80 | 70 | 80 | 80 |
| T (60%)[(2)] (°C) | 132.9 | 135.9 | 132.9 | 132.9 |
| **Production Conditions** | | | | |
| **PE Solution** | | | | |
| PE Concentration (% by mass) | 30 | 30 | 30 | 30 |
| Blending Conditions | | | | |
| $Q^{(3)}$ (kg/h) | 90 | 90 | 90 | 20 |
| $Ns^{(4)}$ (rpm) | 300 | 300 | 300 | 400 |
| Q/Ns (kg/h/rpm) | 0.3 | 0.3 | 0.3 | 0.05 |
| $\omega_0^{(5)}$ (rad/sec) | 2.1 | 21 | 2.1 | 55 |
| $\eta^*(0.01)^{(6)}$ (Pa·s) | 35,000 | 15,000 | 35,000 | 8,000 |
| **Stretching** | | | | |
| Temperature (°C) | 116 | 116 | 116 | 116 |
| Magnification (MD x TD) | 5 x 5 | 5 x 5 | 5 x 5 | 5 x 5 |
| Speed (%/sec) | 20 | 20 | 100 | 20 |
| **Heat Setting** | | | | |
| Temperature (°C) | 125 | 125 | 122 | 122 |
| Time (minute) | 10 | 10 | 10 | 10 |
| **Properties of Microporous Membrane** | | | | |
| Average Thickness (μm) | 20.5 | 19.5 | 19.7 | 20.5 |
| Air Permeability (sec/100 cm³) | 509 | 483 | 441 | 509 |
| Porosity (%) | 38 | 39 | 41 | 38 |
| Pin Puncture Strength (g/20 μm) | 332 | 477 | 512 | 332 |
| (mN/20 μm) | 3,253.6 | 4,674.6 | 5,017.6 | 3,253.6 |
| Tensile Rupture Strength (kg/cm²) MD | 820 | 1,270 | 1,320 | 820 |
| (kPa) MD | 80,360 | 124,460 | 129,360 | 80,360 |
| (kg/cm²) TD | 660 | 1,130 | 1,200 | 660 |
| (kPa) TD | 64,680 | 110,740 | 117,600 | 64,680 |
| Tensile Rupture Elongation (%) MD | 70 | 200 | 170 | 70 |
| (%) TD | 110 | 310 | 250 | 110 |
| Shutdown Start Temperature (°C) | 125.3 | 126.9 | 124.3 | 121.5 |
| Air Permeability Change Ratio (sec/100 cm³/°C) | 9,700 | 8,300 | 14,000 | 9,700 |
| Shutdown Temperature (°C) | 132.8 | 136.2 | 133.4 | 132.8 |
| Maximum Melting Shrinkage Ratio (%) TD | 31 | 22 | 53 | 28 |
| Meltdown Temperature (°C) | 152.4 | 158.7 | 160.4 | 144.4 |

## Table 1 (continued)

| No. | Comparative Example 4 |
|---|---|
| **Resin Composition** | |
| **PE Composition** | |
| UHMWPE            $Mw^{(1)}$ | $2.5 \times 10^6$ |
| % by mass | 20 |
| HDPE            $Mw^{(1)}$ | $3.0 \times 10^5$ |
| % by mass | 80 |
| T $(60\%)^{(2)}$ (°C) | 132.9 |
| **Production Conditions** | |
| **PE Solution** | |
| PE Concentration (% by mass) | 30 |
| Blending Conditions | |
| $Q^{(3)}$ (kg/h) | 60 |
| $Ns^{(4)}$ (rpm) | 100 |
| Q/Ns (kg/h/rpm) | 0.6 |
| $\omega_0^{(5)}$ (rad/sec) | - |
| $\eta^*(0.01)^{(6)}$ (Pa·s) | - |
| **Stretching** | |
| Temperature (°C) | - |
| Magnification (MD x TD) | - |
| Speed (%/sec) | - |
| **Heat Setting** | |
| Temperature (°C) | - |
| Time (minute) | - |
| **Properties of Microporous Membrane** | |
| Average Thickness (μm) | - |
| Air Permeability (sec/100 cm³) | - |
| Porosity (%) | - |
| Pin Puncture Strength    (g/20 μm) | - |
| (mN/20 μm) | - |
| Tensile Rupture Strength (kg/cm²)   MD | - |
| (kPa)    MD | - |
| (kg/cm²)   TD | - |
| (kPa)    TD | - |
| Tensile Rupture Elongation (%)    MD | - |
| (%)    TD | - |
| Shutdown Start Temperature (°C) | - |
| Air Permeability Change Ratio (sec/100 cm³/°C) | - |
| Shutdown Temperature (°C) | - |
| Maximum Melting Shrinkage Ratio (%) TD | - |
| Meltdown Temperature (°C) | - |

Note: (1) Mw represents a mass-average molecular weight.

(2) A temperature at which the crystal-melting calorie $\Delta H_m$ measured by DSC at a temperature-elevating speed of 10°C/minute reached 60% of the total $\Delta H_m$.

(3) Q represents the total charging speed of the polyethylene composition and the liquid paraffin to the double-screw extruder.

(4) Ns represents a screw rotation speed.

(5) $\omega_0$ represents an angular frequency at which the storage modulus (G') and the loss modulus (G") obtained by melt viscoelasticity measurement at 180°C were equal to each other.

(6) $\eta^*(0.01)$ represents a complex viscosity obtained by melt viscoelasticity measurement at an angular frequency of 0.01 rad/sec.

As is clear from Table 1, the microporous polyethylene membranes of Examples 1 to 5 had shutdown temperatures of 135°C or lower, maximum melting shrinkage ratios of 40% or less, and meltdown temperatures of 150°C or higher, exhibiting low shutdown temperatures and excellent melting shrinkage resistance, and high meltdown temperatures. They further had excellent permeability and mechanical strength. With T (60%) of higher than 135°C, the membrane of Comparative Example 1 had a higher shutdown temperature, and a lower air permeability change ratio of less than 9,000 sec/100 cm$^3$/°C after the start of shutdown than those of Examples 1 to 5. With a stretching speed of more than 80%/second, the membrane of Comparative Example 2 had poorer melting shrinkage resistance than those of Examples 1 to 5. Because the ratio of the total charging speed Q of the polyethylene composition and the liquid paraffin to a screw rotation speed Ns was less than 0.1 kg/h/rpm in Comparative Example 3, the polyethylene solution had $\eta^*$ (0.01) of less than 10,000 Pa·s, so that the membrane had a lower meltdown temperature than those of Examples 1 to 5.

EFFECT OF THE INVENTION

This invention provides a microporous polyolefin membrane having excellent balance of shutdown properties, melting shrinkage resistance and meltdown properties as well as excellent permeability and mechanical properties. Separators formed by the microporous polyolefin membrane of this invention provide batteries with excellent stability, heat resistance, storage stability and productivity.

**Claims**

1. A microporous polyolefin membrane comprising a polyethylene resin, and having (a) a shutdown temperature of 135°C or lower, at which the air permeability measured while heating at a temperature-elevating speed of 5°C/minute reaches 1 x 10$^5$ sec/100 cm$^3$, (b) a maximum melting shrinkage ratio of 40% or less in a transverse direction in a temperature range of 135 to 145°C, which is measured by thermomechanical analysis under a load of 2 gf and at a temperature-elevating speed of 5°C/minute, and (c) a meltdown temperature of 150°C or higher, at which the air permeability measured while further heating after reaching the shutdown temperature becomes 1 x 10$^5$ sec/100 cm$^3$ again,
   wherein the polyethylene resin has a temperature of 135 °C or lower, at which a crystal-melting calorie measured by differential scanning calorimetry at a constant temperature-elevating speed in a range of 3 to 20°C/minute reaches 60% of the total crystal-melting calorie.

2. A method for producing the microporous polyolefin membrane recited in claim 1, comprising the steps of (1) melt-blending a polyolefin resin comprising a polyethylene resin having a temperature of 135°C or lower, at which a crystal-melting calorie measured by differential scanning calorimetry at a constant temperature-elevating speed in a range of 3 to 20°C/minute reaches 60% of the total crystal-melting calorie, with a membrane-forming solvent, to prepare a polyolefin resin solution having an angular frequency of 0.1 rad/sec or more, at which a storage modulus and a loss modulus obtained by melt viscoelasticity measurement at a constant temperature in a range of 160 to 220°C are equal to each other, and a complex viscosity of 1 x 10$^4$ Pa·s or more at an angular frequency of 0.01 rad/sec in the melt viscoelasticity measurement, (2) extruding the polyolefin resin solution through a die, (3) cooling it to form a gel-like sheet, and (4) removing the membrane-forming solvent from the gel-like sheet,
   wherein the melt-blending of the polyolefin resin with the membrane-forming solvent is conducted in a double-screw extruder, the ratio Q/Ns of the total charging speed Q (kg/h) of the polyolefin resin and membrane-forming solvent to the screw rotation speed Ns (rpm) of the double-screw extruder being 0.1 to 0.55 kg/h/rpm; and
   wherein the gel-like sheet is stretched at a speed of 1 to 80%/second per 100% of the stretching-direction length before stretching.

3. A battery separator formed by the microporous polyolefin membrane recited in claim 1.

4. A battery comprising a separator formed by the microporous polyolefin membrane recited in claim 1.

5. A microporous polyolefin membrane according to claim 1,
   wherein the polyethylene resin contains a copolymer of ethylene and another $\alpha$-olefin.

**6.** A microporous polyolefin membrane according to claim 5, wherein the copolymer is produced by the use of single-site catalysts and has a mass-average molecular weight of $1 \times 10^4$ or more and less than $7 \times 10^5$.

**Patentansprüche**

**1.** Mikroporöse Polyolefinmembran, die ein Polyethylenharz enthält und (a) eine Schließtemperatur von 135° C oder weniger, bei der die unter Erwärmung mit einer Temperaturanstiegsgeschwindigkeit von 5° C/Minute gemessene Luftpermeabilität $1 \times 10^5$ sec/100 cm$^3$ erreicht, (b) ein maximales Schmelzschrumpfverhältnis von 40% oder weniger in Querrichtung in einem Temperaturbereich von 135 bis 145° C, das durch thermomechanische Analyse unter einer Last von 2 gf und bei einer Temperaturanstiegsgeschwindigkeit von 5° C/Minute gemessen ist, und (c) eine Schmelztemperatur von 150° C oder mehr, bei der die unter weiterer Erwärmung nach Erreichen der Schließtemperatur gemessene Luftpermeabilität wieder $1 \times 10^5$ sec/100 cm$^3$ erreicht, aufweist, wobei das Polyethylenharz eine Temperatur von 135° C oder weniger aufweist, bei der ein durch differenzielle Abtastkalorimetrie bei konstanter Temperaturanstiegsgeschwindigkeit im Bereich von 3 bis 20° C/Minute gemessener Kristallschmelzwärmewert 60% des gesamten Kristallschmelzwärmewerts erreicht.

**2.** Verfahren zur Herstellung der mikroporösen Polyolefinmembran nach Anspruch 1 mit folgenden Schritten (1) Schmelzmischen eines Polyolefinharzes, das ein Polyethylenharz mit einer Temperatur von 135° C oder weniger, bei der ein durch differenzielle Abtastkalorimetrie bei konstanter Temperaturanstiegsgeschwindigkeit im Bereich von 3 bis 20° C/Minute gemessener Kristallschmelzwärmewert 60% des gesamten Kristallschmelzwärmewerts erreicht, umfasst, mit einem Membran-bildenden Lösungsmittel zur Bildung einer Polyolefinharzlösung mit einer Winkelfrequenz von 0,1 rad/sec oder mehr, bei der ein Speichermodul und ein Verlustmodul, gewonnen durch schmelzviskoelastische Messung bei konstanter Temperatur im Bereich von 160 bis 220° C, einander gleich sind, und einer komplexen Viskosität von $1 \times 10^4$ Pa • s oder mehr bei einer Winkelfrequenz von 0,01 rad/sec in der schmelzviskoelastischen Messung, (2) Extrudieren der Polyolefinharzlösung durch ein Formwerkzeug, (3) Kühlen der Polyolefinharzlösung zur Bildung einer gelartigen Lage und (4) Entfernen des Membran-bildenden Lösungsmittels aus der gelartigen Lage, wobei das Schmelzmischen des Polyolefinharzes mit dem Membran-bildenden Lösungsmittel in einem Doppelschraubenextruder erfolgt, das Verhältnis Q/Ns der gesamten Beladungsgeschwindigkeit Q (kg/h) des Polyolefinharzes und des Membran-bildenden Lösungsmittels zur Schraubendrehgeschwindigkeit Ns (rpm) des Doppelschraubenextruders 0,1 bis 0,55 kg/h/rpm beträgt und die gelartige Lage gestreckt wird, wobei das Strecken bei einer Geschwindigkeit von 1 bis 80%/Sekunde pro 100% der Länge in Streckrichtung vor dem Strecken erfolgt.

**3.** Batterieseparator, der aus der mikroporösen Polyolefinmembran nach Anspruch 1 gebildet ist.

**4.** Batterie mit einem aus der mikroporösen Polyolefinmembran nach Anspruch 1 gebildeten Separator.

**5.** Mikroporöse Polyolefinmembran nach Anspruch 1, wobei das Polyethylenharz ein Copolymer aus Ethylen und einem anderen α-Olefin enthält.

**6.** Mikroporöse Polyolefinmembran nach Anspruch 5, wobei das Copolymer unter Verwendung von Einzelzentrenkatalysatoren hergestellt ist und ein massengemitteltes Molekulargewicht von $1 \times 10^4$ oder mehr und weniger als $7 \times 10^5$ aufweist.

**Revendications**

**1.** Membrane de polyoléfine microporeuse comprenant une résine de polyéthylène, et ayant (a) une température d'arrêt de 135°C ou moins, à laquelle la perméabilité à l'air mesurée pendant un chauffage à une vitesse de montée en température de 5°C/minute, atteint $1 \times 10^5$ s/100 cm$^3$, (b) un indice de retrait à l'état fondu maximal de 40 % ou moins dans le sens travers dans la plage de température allant de 135 à 145°C, qui est mesuré par analyse thermomécanique sous une charge de 2 gf et à une vitesse de montée en température de 5°C/minute, et (c) une température de fusion finale de 150°C ou plus, à laquelle la perméabilité à l'air mesurée pendant un chauffage supplémentaire après avoir atteint la température d'arrêt devient de nouveau de $1 \times 10^5$ s/100 cm$^3$, dans laquelle la résine de polyéthylène a une température de 135°C ou moins, à laquelle les calories de fusion cristalline, mesurées par calorimétrie à balayage différentiel à une vitesse de montée en température constante située dans la plage allant de 3 à 20°C/minute, atteignent 60 % des calories de fusion cristalline totales.

**2.** Procédé pour produire la membrane de polyoléfine microporeuse de la revendication 1, comprenant les étapes consistant à (1) mélanger à l'état fondu une résine de polyoléfine ayant une température de 135°C ou moins, à laquelle les calories de fusion cristalline, mesurées par calorimétrie à balayage différentiel à une vitesse de montée en température constante située dans la plage allant de 3 à 20°C/minute, atteignent 60 % des calories de fusion cristalline totales, avec un solvant de formation de membrane, pour préparer une solution de résine de polyoléfine ayant une fréquence angulaire de 0,1 rad/s ou plus, à laquelle le module de stockage et le module de perte, obtenus par mesure de viscoélasticité à l'état fondu à une température constante située dans la plage allant de 160 à 220°C, sont égaux l'un à l'autre, et une viscosité complexe de $1 \times 10^4$ Pa.s ou plus à une fréquence angulaire de 0,01 rad/s dans la mesure de viscoélasticité à l'état fondu, (2) extruder la solution de résine de polyoléfine à travers une filière, (3) la refroidir pour former une feuille analogue à un gel, et (4) éliminer de la feuille analogue à un gel le solvant de formation de membrane, dans lequel le mélange à l'état fondu de la résine de polyoléfine avec le solvant de formation de membrane est effectué dans une extrudeuse double vis, le rapport Q/Ns de la vitesse de chargement totale Q (kg/h) de la résine de polyoléfine et du solvant de formation de membrane à la vitesse de rotation de vis Ns (t/min) de l'extrudeuse double vis étant de 0,1 à 0,55 kg/h/(t/min) ; et dans lequel la feuille analogue à un gel est étirée à une vitesse de 1 à 80 %/s pour 100 % de la longueur dans le sens de l'étirage avant étirage.

**3.** Séparateur de batterie formé de la membrane de polyoléfine microporeuse présentée dans la revendication 1.

**4.** Batterie comprenant un séparateur formé de la membrane de polyoléfine microporeuse présentée dans la revendication 1.

**5.** Membrane de polyoléfine microporeuse selon la revendication 1, dans laquelle la résine de polyéthylène contient un copolymère d'éthylène et d'une autre α-oléfine.

**6.** Membrane de polyoléfine microporeuse selon la revendication 5, dans laquelle le copolymère est produit par utilisation de catalyseurs à un seul site et a une masse moléculaire moyenne en masse de $1 \times 10^4$ ou plus et inférieure à $7 \times 10^5$.

# Fig. 1

# Fig. 2

# Fig. 3

# Fig. 4

# Fig. 5

# Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2132327 A
- JP 2004196870 A
- JP 2004196871 A
- WO 9723554 A
- JP 3347854 B
- WO 2007032450 A
- WO 200020493 A
- JP 2002256099 A
- WO 2005054350 A